(19) Europäisches Patentamt
European Patent Office
Office européen des brevets

(11) Numéro de publication : **0 541 765 B1**

(12) # FASCICULE DE BREVET EUROPEEN

(45) Date de publication du fascicule du brevet : **01.02.95 Bulletin 95/05**

(51) Int. Cl.$^6$ : **H01S 3/0947,** C09B 57/02

(21) Numéro de dépôt : **92911775.2**

(22) Date de dépôt : **27.05.92**

(86) Numéro de dépôt international : **PCT/FR92/00476**

(87) Numéro de publication internationale : **WO 92/22108 10.12.92 Gazette 92/31**

(54) **COLORANTS LASER COMPRENANT DES DERIVES DE COUMARINE HYDROSOLUBLES.**

(30) Priorité : **30.05.91 FR 9106550**

(43) Date de publication de la demande : **19.05.93 Bulletin 93/20**

(45) Mention de la délivrance du brevet : **01.02.95 Bulletin 95/05**

(84) Etats contractants désignés : **BE CH DE FR GB IT LI**

(56) Documents cités :
**US-A- 4 103 256**
**US-A- 4 933 948**
**US-A-35 211 87**

(73) Titulaire : **LABORATOIRES EUROBIO**
**7 Avenue de Scandinavie**
**F-91940 Les Ulis (FR)**
Titulaire : **COMMISSARIAT A L'ENERGIE ATOMIQUE**
**31-33, rue de la Fédération**
**F-75752 Paris Cédex 15 (FR)**

(72) Inventeur : **CHALOM, Joseph**
**Place J.-Blumenthal**
**F-93600 Epinay-sur-Seine (FR)**
Inventeur : **REVEILLEAU, Pierre**
**7, place de Scandinavie**
**F-91953 Les Ulis Cédex (FR)**
Inventeur : **MIALOCQ, Jean-Claude**
**29, rue des Tilleuls**
**F-91410 Dourdan (FR)**
Inventeur : **PIUZZI, François**
**229, boulevard Vanne**
**F-94230 Cachan (FR)**
Inventeur : **SALIERES, Jean-Marc**
**141, rue de Vaugirard**
**F-75015 Paris (FR)**

(74) Mandataire : **Phélip, Bruno et al**
**c/o Cabinet Harlé & Phélip**
**21, rue de La Rochefoucauld**
**F-75009 Paris (FR)**

**EP 0 541 765 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet des colorants laser comprenant de nouveaux dérivés de coumarine hydrosolubles.

Les lasers à colorant sont des lasers dans lesquels on utilise une solution de colorant pour produire une émission stimulée de rayonnement.

Dans de tels lasers, on a déjà utilisé certains dérivés de coumarine comme il est décrit par Drexhage, dans Laser Focus, 1973, vol.9, p.35-39, et dans Optics Communications, vol. 15, n°3, 1975, p.339 à 403, et par Snavely dans Applied Physics Letters, vol.11, n°9, 1967, p.275-276.

Avec la plupart des dérivés de coumarine, on utilise généralement comme solvant, dans la solution de colorant, des composés organiques tels que le méthanol, l'éthanol, l'éthylène glycol, le sulfoxyde de diméthyle ou le toluène car ces dérivés de coumarine sont peu solubles dans l'eau. L'utilisation d'une solution organique de colorant constitue un inconvénient car l'indice de réfraction du solvant organique est fortement dépendant de la température, ce qui entraîne des modifications néfastes de l'indice de réfraction de la solution en cas de surchauffe locale. De même, les solutions organiques n'ont pas de bons coefficients de transfert de chaleur, ce qui ne permet pas d'assurer un refroidissement satisfaisant de la solution de colorant.

En revanche, les solutions aqueuses de colorants sont beaucoup plus intéressantes car l'indice de réfraction de l'eau varie peu en fonction de la température et le coefficient de transfert de chaleur de l'eau est meilleur que celui des solvants organiques tels que les alcools.

Aussi, des recherches ont été entreprises pour trouver d'autres dérivés de coumarine susceptibles d'être utilisés dans un laser à colorant sous la forme de solutions aqueuses, et comme il est décrit dans les documents précités, ces recherches ont conduit à des dérivés de coumarine rendus hydrosolubles par adjonction de substituants hydrophiles tels que OH ou le groupe acide sulfonique. Cependant, la réalisation de dérivés sulfonés de coumarine met en oeuvre des opérations de synthèse complexes.

La présente invention a pour objet des colorants laser comprenant de nouveaux dérivés de coumarine, hydrosolubles comportant des substituants hydrophiles, plus faciles à synthétiser et ayant une efficacité laser pratiquement équivalente à celle de l'analogue coumarine ne comportant pas ce substituant hydrophile.

Selon l'invention, le colorant comprend un dérivé de coumarine de formule :

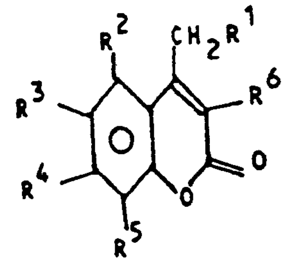

(I)

dans laquelle :

1°) $R^1$ représente un radical répondant aux formules :

- $(OCH_2CH_2)_mOCH_2R^7$, ou
- $(OCH(CH_3)CH_2)_mOCH_2R^7$,

dans lesquelles m est un nombre entier de 1 à 30, et $R^7$ représente

- un atome d'hydrogène,
- un atome d'halogène,
- OH,
- $OR^8$,
- SH,
- $SR^8$,
- COOH,
- $COOR^9$,
- $NH_2$,
- $NHR^8$,
- $NR^8R^{10}$,
- $SO_3H$,
- $SO_3R^9$, ou
- un radical alkyle, alcoxy ou aryle, non substitué ou substitué par au moins un substituant choisi parmi

les atomes d'halogène, le radical phényle, $CF_3$, OH , $OR^8$ , SH , $SR^8$,COOH, $COOR^8$, $NH_2$, $NHR^8$ , $NR^8R^{10}$, $SO_3H$ et $SO_3R^9$,

où $R^8$ est un radical alkyle ou aryle, $R^9$ est un radical alkyle ou aryle, $NH_4$ ou $M_{1/v}$ avec M étant un métal de valence v, et $R^{10}$ est un radical alkyle ou aryle , ou $R^8$ et $R^{10}$ peuvent former ensemble un cycle hydrocarboné, saturé ou insaturé comportant éventuellement un hétéroatome choisi parmi O, S et N,

2°) $R^2$, $R^3$, $R^4$ et $R^5$ qui peuvent être identiques ou différents, représentent :

- un atome d'hydrogène,
- un atome d'halogène,
- $NH_2$,
- $NHR^8$,
- $NR^8R^{10}$,
- SH
- $SR^8$
- OH
- $OR^8$

avec $R^8$ et $R^{10}$ ayant la signification donnée ci-dessus,

- un radical alkyle ou alcoxy, non substitué ou substitué par au moins un substituant choisi parmi les atomes d'halogène, OH, $OR^8$, SH, $SR^8$, COOH, $COOR^9$, $NH_2$, $NHR^8$, $NR^8R^{10}$, $SO_3H$, $SO_3R^9$ et $CF_3$, avec $R^8$, $R^9$ et $R^{10}$ ayant la signification donnée ci-dessus, ou

3) $R^2$ et $R^3$ , $R^3$ et $R^4$ ou $R^4$ et $R^5$ forment ensemble un noyau cyclique saturé ou insaturé de 5 à 8 atomes de carbone, ou un noyau hétérocyclique comportant au moins un hétéroatome choisi parmi N, O et S, ou

4)$R^3$, $R^4$ et $R^5$ forment avec le noyau phényle auquel ils sont liés un noyau polycyclique, à trois cycles condensés comportant éventuellement un ou plusieurs hétéroatomes choisis parmi N, O et S, ou

5) $R^2$, $R^3$ et $R^4$ forment avec le noyau phényle auquel ils sont liés un noyau polycyclique, à trois cycles condensés, comportant éventuellement un ou plusieurs hétéroatomes choisis parmi N , O et S, et

6) $R^6$ représente

- un atome d'hydrogène,
- un atome d'halogène,
- COOH,
- $COOR^9$ avec $R^9$ ayant la signification donnée ci-dessus, ou
- un radical alkyle non substitué ou substitué par au moins un substituant choisi parmi les atomes d'halogène, OH, SH, COOH, $COOR^9$, $OR^8$, $SR^8$ , $SO_3H$ et $SO_3R^9$ avec $R^8$ et $R^9$ ayant la signification donnée ci-dessus.

Dans la formule donnée ci-dessus, les termes radical alkyle ou alcoxy désignent des radicaux linéaires ou ramifiés ayant généralement de 1 à 10 atomes de carbone, de préférence 1 à 5 atomes de carbone.

Les termes radical aryle désignent les radicaux dérivés d'hydrocarbures aromatiques comme le benzène, le naphtalène. A titre d'exemple de tels radicaux , on peut citer les radicaux phényle, naphtyle . Les termes de cycle hydrocarboné désignent des hydrocarbures cycliques saturés ou insaturés, ayant de 3 à 10 atomes de carbone.

Lorsque le cycle comporte un ou plusieurs hétéroatomes, il peut s'agir par exemple de la pipéridine, de la pyridine, de la pipérazine, du pyrrole, du furanne, du pyranne, de la morpholine.

Lorsque $R^2$ et $R^3$, $R^3$ et $R^4$ ou $R^4$ et $R^5$ forment un cycle, il peut s'agir des cycles hydrocarbonés et des hétérocycles mentionnés ci-dessus.

Lorsque $R^2$, $R^3$ et $R^4$ ou $R^3$, $R^4$ et $R^5$ forment avec le noyau phényle, un noyau polycyclique comportant éventuellement un ou plusieurs hétéroatomes, il peut s'agir par exemple du noyau suivant :

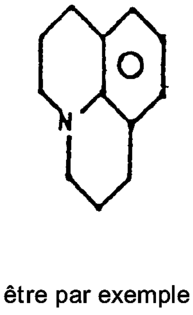

Les métaux M représentant $R^9$ peuvent être par exemple des métaux alcalins comme le sodium.

Dans la formule (I) ci-dessus, la présence du radical $R^1$ qui comporte une chaîne polyéther, permet de conférer aux dérivés de coumarine des propriétés d'hydrosolubilité, sans pour autant affecter les propriétés de colorant laser du dérivé.

Selon un premier mode de réalisation du colorant de l'invention, dans le dérivé de coumarine de formule (I), au moins l'un des $R^2$, $R^3$, $R^4$ et $R^5$, par exemple $R^4$, représente $NH_2$, $NHR^8$ , $NR^8R^{10}$ , OH, $OR^8$, SH, $SR^8$ ou un radical alkyle substitué ou non.

A titre d'exemple de tels dérivés, on peut citer ceux dans lesquels $R^4$ représente $NH_2$, $N(CH_3)_2$, $N(C_2H_5)_2$ ou OH.

Lorsque $R^4$ est choisi parmi les substituants mentionnés ci-dessus, $R^2$, $R^3$, $R^5$ et $R^6$ représentent avantageusement un atome d'hydrogène.

D'autres exemples de dérivés de coumarine correspondant à ce premier mode de réalisation du colorant de l'invention sont ceux dans lesquels $R^3$ et $R^4$ représentent OH. Dans ce cas, $R^2$, $R^5$ et $R^6$ représentent avantageusement un atome d'hydrogène.

Selon un second mode de réalisation du colorant de l'invention, dans le dérivé de coumarine de formule (I), $R^2$, $R^3$ et $R^4$ ou $R^3$, $R^4$ et $R^5$ forment avec le noyau phényle auquel ils sont liés, un noyau polycyclique comportant trois cycles condensés et un atome d'azote.

A titre d'exemple, $R^3$, $R^4$ et $R^5$ peuvent former avec le noyau phényle auquel ils sont liés le noyau polycyclique de formule:

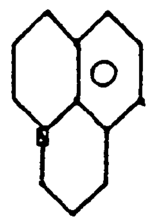

Dans ce cas , $R^2$ et $R^6$ peuvent représenter un atome d'hydrogène.

Dans les deux modes de réalisation du colorant de l'invention , $R^1$ représente avantageusement -$(OCH_2CH_2)_mOCH_2R^7$, et m est choisi de façon à éviter la formation dans l'eau de dimères, d'aggrégats ou de micelles du dérivé de coumarine.

De préférence , m est un entier de 2 à 5.

A titre d'exemple $R^7$ peut représenter un atome d'hydrogène, $COOR^9$ avec $R^9$ représentant un radical alkyle, par exemple éthyle, ou COOH, et m peut être égal à 2.

Les dérivés de coumarine de l'invention peuvent être préparés par un procédé classique mettant en oeuvre la réaction de Pechman, à partir d'esters β-cétoniques comportant le groupement hydrophile $R^1$.

Ces esters β-cétoniques répondent à la formule:

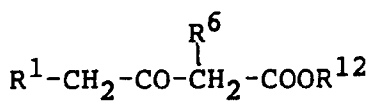

(II)

dans laquelle $R^1$ et $R^6$ ont la signification donnée ci-dessus, et $R^{12}$ représente un radical alkyle, un radical aryle ou un radical cycloalkyle, par exemple le radical méthyle ou éthyle.

Ces esters β-cétoniques peuvent être préparés par un procédé classique à partir des acides de formule $R^1-CH_2-COOH$.

Le procédé de préparation de ces esters β-cétoniques comprend, par exemple les étapes suivantes:

1°) transformer un acide de formule $R^1-CH_2-COOH$ dans laquelle $R^1$ a la signification donnée ci-dessus, en l'imidazolide ou le chlorure d'acide correspondant ,

2°) faire réagir l'imidazolide ou le chlorure d'acide avec un ester cyclique de formule:

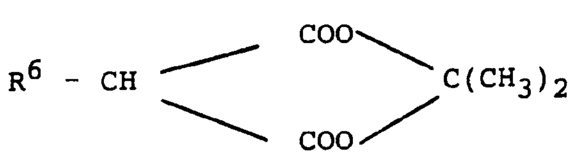

(III)

pour former un dérivé acylé, et

3°) faire réagir le dérivé acylé avec un alcool de formule $R^{12}OH$ pour obtenir l'ester β-cétonique de formule (II).

Les acides de départ $R^1$-$CH_2$-COOH sont des produits du commerce ou peuvent être préparés par des procédés classiques.

L'ester de formule (III) existe dans le commerce (acide de Meldrum) ou peut être préparé par un procédé classique en partant de l'acide de Meldrum ou d'un malonate de diéthyle et en pratiquant deux substitutions successives sur le $CH_2$ malonique.

Pour préparer les dérivés de coumarine de formule (I) utilisés dans l'invention, on fait réagir l'ester β-cétonique de formule (II) décrit ci-dessus avec un phénol de formule :

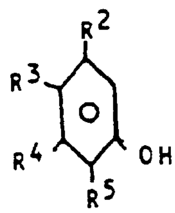

(IV)

(IV)

dans laquelle $R^2$, $R^3$, $R^4$ et $R^5$ ont la signification donnée ci-dessus.

Cette réaction de condensation (réaction de Pechmann) peut être effectuée dans l'éthanol en présence d'un catalyseur acide tel que $H_2SO_4$, HCl, $CF_3COOH$ ou leurs sels , par exemple le chlorure d'aluminium, le chlorure de zinc, le chlorure d'étain.

Dans les solutions de colorant laser de l'invention, le dérivé de coumarine est préférentiellement en solution dans l'eau.

Comme on l'a vu précédemment, le solvant est de préférence l'eau car l'emploi d'un tel solvant permet de ne pas avoir de variations importantes de l'indice de réfraction avec la température et d'avoir un meilleur transfert de chaleur de la solution de colorant vers l'extérieur.

Par ailleurs, l'eau est un solvant non toxique et plus sûr que certains solvants organiques comme le méthanol, qui sont inflammables.

Toutefois, on peut aussi utiliser comme solvant dans l'invention des mélanges eau-alcool, par exemple eau-éthanol, pour accorder l'émission du laser vers le bleu ou obtenir une solution de colorant contenant davantage de dérivé de coumarine afin d'avoir une densité optique plus élevée à la longueur d'onde du pompage laser.

En effet, dans la cellule du laser à colorant, il est préférable que la densité optique de la solution de colorant soit supérieure ou égale à 1 , à la longueur d'onde d'excitation.

Généralement, ceci peut être obtenu en utilisant des solutions de colorant comprenant de 0,5 à 3 g/l de dérivé de coumarine.

Selon l'invention, la solution de colorant peut aussi contenir d'autres additifs, tels que le diazabicyclooctane et le cyclooctatétraène, en vue d'améliorer sa stabilité.

La source d'énergie de pompage capable de produire une émission stimulée à partir de la solution de colorant peut être constituée par n'importe quelle source utilisée habituellement dans les lasers à colorant.

On peut par exemple utiliser un tube à éclair ou un laser à excimère, qui permet d'atteindre des fréquences de 500 Hz. La longueur d'onde de pompage utilisée , dans les exemples décrits ci-après, est la longueur d'onde de 308 nm ( $X_2Cl$ ) qui est très efficace pour les coumarines.

Les colorants laser de l'invention peuvent être utilisés dans tous les domaines où l'on veut disposer de photons dans le bleu ou le vert avec des fréquences de répétition élevées.

Ils peuvent être utilisés par exemple pour la spectroscopie atomique, la spectroscopie moléculaire, les études en photophysique, en photochimie ou photobiologie ainsi que pour des applications industrielles comme la séparation isotopique.

D'autres caractéristiques et avantages de l'invention apparaîtront mieux à la lecture de la description qui suit donnée bien entendu à titre illustratif et non limitatif en référence à la figure 1 , qui représente un spectre d'émission de fluorescence d'un colorant conforme à l'invention. Ce spectre couvre le domaine de longueurs d'onde 400-650 nm avec un maximum situé vers 475 nm.

Le laser à colorant qui a servi à tester les colorants laser de l'invention comporte deux cellules de colorant laser. La première cellule est utilisée à la fois pour l'étage oscillateur laser et l'étage préamplificateur . La

deuxième cellule sert pour l'étage amplificateur . Un laser à excimère ( XeCl) qui constitue la source d'énergie de pompage à 308 nm, est actionné par un dispositif d'alimentation dont le taux de répétition peut être réglé de façon appropriée.

Pour étudier la puissance du faisceau lumineux sortant de l'étage d'amplification, on dispose à la sortie une lentille divergente et une sonde de mesure.

On décrit , ci-après, l'utilisation dans ce laser d'une solution aqueuse d'un dérivé de coumarine constitué par la 7-amino-4-(2',5',8'-trioxanonyl)-coumarine de formule:

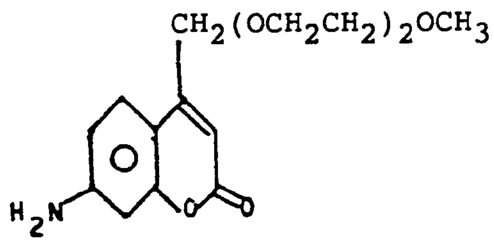

1. Préparation du dérivé de coumarine.

a) Préparation du 3,6,9-trioxadécanoylacétate d'éthyle.(composé n°1) de formule:

$CH_3O(CH_2CH_2O)_2$-$CH_2$-CO-$CH_2$-$COOC_2H_5$

Dans un premier récipient, on prépare une solution anhydre de 29 g d'acide 3,6,9-trioxadécanoïque (0,16 mol) dans 400 ml de dichlorométhane, puis on introduit dans cette solution, sous agitation, 28,3g (0,174 mol) de carbonyldiimidazole et on poursuit l'agitation pendant 2h.

Dans un second récipient, on introduit 24,65 g d'acide de Meldrum dans 400 ml de dichlorométhane anhydre, puis on refroidit à -5°C et on ajoute 12,9 g de pyridine dans 24 ml de dichlorométhane.

En maintenant le second récipient à -5°C, on introduit sur une durée de 30 min, à l'abri de la lumière, la solution du premier récipient, puis on porte à 40°C pendant 15 min.

On ajoute ensuite 165 ml d'eau glacée en refroidissant, puis on laisse décanter. On lave alors la phase organique avec 120 ml de HCl 2,5 N, puis avec 120ml de solution saline saturée, et on évapore jusqu'à siccité.

On reprend alors le résidu dans 500 ml d'éthanol anhydre et on porte au reflux pendant 2h30mn. On évapore sous vide et on obtient ainsi 12,1g de composé n°1, ce qui correspond à un rendement de 30%.

Les caractéristiques de ce composé sont les suivantes :

1°) point d'ébullition sous 54 Pa: 140-145°C.

2°) Chromatographie sur couche mince (CCM) de silice fluorescente, en utilisant comme éluant un mélange butanol/acide acétique/eau (60:20:20):

- Rf = 0,7, révélé sous ultraviolet à 254 nm, aux vapeurs d'iode, et à la 2,4 DNPH.

b) Préparation de 7-amino-4-(2',5',8'- trioxanonyl)-coumarine ( composé n°2).

Dans un ballon de 100 ml, on introduit 15g (0,06 mol) de composé n°1, 6,6 g ( 0,06 mol) de 3-aminophénol, 45 ml d'éthanol absolu et 9,5g de chlorure de zinc . On porte le mélange réactionnel à l'ébullition sous agitation pendant 24 h, puis on le verse dans un mélange de 800 ml de dichlorométhane et de 600 ml d'eau. On laisse décanter, on extrait la phase aqueuse avec deux fois 200 ml de dichlorométhane et on lave les phases organiques réunies avec 120 ml d'eau. On évapore jusqu'à siccité. On fait cristalliser dans 50 ml d'acétate d'éthyle, on purifie le produit brut obtenu sur une colonne de silice en utilisant l'acétate d'éthyle comme éluant et on recristallise dans l'acétate d'éthyle.

On obtient ainsi 2,67 g du composé n°2, ce qui correspond à un rendement de 15%.

Les caractéristiques du produit sont les suivantes .

1°) CCM ( silice fluorescente $K_6F$, acétate d'éthyle)

- Rf=0,5 (révélation à 254 nm, 356 nm, $I_2$).

2°) Solubilité dans l'eau : 1g/l.

2. Utilisation du dérivé de coumarine dans un laser à colorant.

On prépare tout d'abord une solution aqueuse du composé n°2 en mettant en solution 248,1 mg de composé n°2 dans 250 $cm^3$ d'eau, ce qui correspond à une concentration sensiblement égale à lg/l de composé n° 2 et à une densité optique $d_{1\,mm}^{308}$ de 1,33.

On remplit la cuve de l'étage oscillateur-préamplificateur de 125 $cm^3$ de cette solution.

On prépare pour l'étage amplificateur une autre solution aqueuse en dissolvant 509,8 mg du composé n°2 dans 500 $cm^3$ d'eau et en diluant ensuite à 1,5 l, ce qui correspond sensiblement à une concentration en composé n°2 de 0,33 g/l. On filtre les deux solutions sur verre fritté n°4 avant de les disposer respectivement dans les cuves .

Pour contrôler l'émission laser, on met en marche le laser à excimère XeCl délivrant 140 mJ à la longueur d'onde de 308 nm et dont 3 à 4% sont utilisés pour pomper l'oscillateur.

On mesure également l'énergie du laser à colorant en utilisant comme lentille divergente, une lentille de -12 dioptries disposée devant la sonde de mesure.

On donne , ci-après, les résultats obtenus, soit l'énergie du laser à colorant en fonction de la longueur d'onde, lorsqu'on réalise l'excitation à 33 Hz, puis à 50 Hz avec le laser XeCl délivrant 140 mJ à 308 nm.

| longueur d'onde (nm) | E (mJ) |
|---|---|
| 450 | 0,9 |
| 455 | 3,0 |
| 460 | 3,7 |
| 465 | 4,15 |
| 470 | 4,3 |
| 475 | 4,3 |

| longueur d'onde (nm) | E(mJ) |
|---|---|
| 480 | 4,3 |
| 485 | 4,0 |
| 490 | 3,7 |
| 495 | 3,0 |
| 500 | 2,2 |
| 505 | 1,3 |
| 510 | 0,9 |

Des mesures d'endurance sur les solutions de colorant décrites ci-dessus, ont montré qu'après 353000 coups laser, la puissance est passée de 160 à 60 mW.

On examine également l'effet de la concentration en colorant laser sur la puissance de sortie.

Dans ce cas, on utilise dans la cuve de l'oscillateur laser et du pré-amplificateur une solution du composé n°2 à 500 mg/l et dans la cuve de l'amplificateur une solution du composé n°2 à 165 mg/l, c'est-à-dire des concentrations qui correspondent à la moitié de celles utilisées précédemment.

On mesure ensuite la puissance du laser. Les puissances obtenues ( en mW) en fonction de la longueur d'onde ( en nm) sont données, ci-après. longueur d'onde

| (nm) | P(mW) |
|---|---|
| 450 | 15 |
| 455 | 50 |
| 460 | 75 |
| 465 | 100 |
| 470 | 120 |

| longueur d'onde (nm) | P(mW) |
|---|---|
| 475 | 125 |
| 480 | 105 |
| 485 | 80 |
| 490 | 60 |
| 495 | 40 |
| 500 | 25 |

On obtient ainsi une puissance de 125 mW à 475 nm.

On étudie également la stabilité de l'émission à 475 nm et on remarque qu'après 15 minutes, la puissance du laser baisse à 60 mW.

On peut utiliser de la même façon dans un laser à colorant les autres dérivés de coumarine de formule (I), par exemple la 7-hydroxy-4-(2′,5′,8′-trioxanonyl)-coumarine qui a une solubilité dans l'eau de lg/l et une solubilité dans un mélange eau-éthanol (90:10) de 7g/l, ainsi que les dérivés répondant aux formules données dans le tableau annexé.

A titre d'exemple, on donne ci-après , le mode de préparation des composés n°5 et 8 du tableau.

Préparation du 2,3,6,7-tétrahydro-9-(2′,5′,8′-trioxa- nonyl)-1H, 5H, 11H-(1)-benzopyrano-(6,7,8-ij)-quinolizinone-11 composé n°5) de formule :

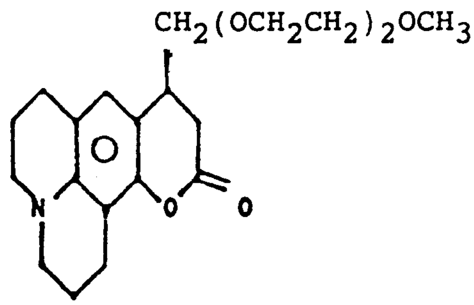

Dans un ballon de 100 ml, on introduit 3 g de 8-hydroxyjulolidine, 3,93g de 3,6,9-trioxadécanoate d'éthyle, 12 ml d'éthanol absolu et 2,49 g de chlorure de zinc. On porte à l'ébullition sous agitation pendant 24 heures, puis on verse le contenu du ballon dans un mélange de 200 ml de dichlorométhane et de 150 ml d'eau. On extrait la phase aqueuse avec deux fois 50 ml de dichlorométhane et on lave les phases organiques réunies avec 50 ml d'eau, puis on évapore jusqu'à siccité.

On purifie le produit brut sur une colonne de silice en utilisant comme éluant $CH_2Cl_2$ puis le mélange $CH_2Cl_2$-THF (90:10) et on fait cristalliser l'huile obtenue dans de l'eau.

On obtient ainsi 3,09 g du composé n°5, ce qui correspond à un rendement de 52%.

Les caractéristiques du produit sont les suivantes :

CCM (silice fluorescente $K_6F$, $CH_2Cl_2$-THF, 90:10).

- Rf = 0,6 révélé à 254 nm, 356 nm et à l'iode.

Préparation de la 7-hydroxy-4-(2′, 5′,8′-trioxanonyl)-coumarine (composé n°8) de formule :

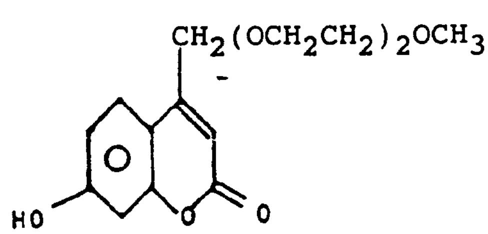

Dans un ballon de 25 ml , on introduit 3,3 g (0,03 mol) de résorcinol, 7,4 g ( 0,03 mol) de composé n°1 et 7,5 ml d'acide trifluoroacétique. On agite à 75°C pendant 5h, puis on verse le contenu du ballon dans un mélange de 300g d'eau et de glace. On extrait par deux fois 150 ml de butanol et on lave les phases butanoliques par deux fois 50 ml d'eau,puis on évapore jusqu'à siccité.

On purifie le produit brut par chromatographie sur colonne de silice en utilisant l'acétate d'éthyle comme éluant et on recristallise les fractions les plus pures dans un mélange éthanol-eau (30:70).

On obtient ainsi 2g du composé n°8, ce qui correspond à un rendement de 23%.

Les caractéristiques du produit sont les suivantes :

1°) CCM ( silice fluorescente $K_6F$, acétate d'éthyle).

- Rf=0,48 révélé à 254 nm, 356 nm et à l'iode.

2°) Solubilité dans l'eau : lg/l.

3°) Solubilité dans le mélange eau-éthanol (90:10): 7g/l.

TABLEAU

Composé n°3

7-diméthylamino-4-(2',5',8'-trioxanonyl)-coumarine

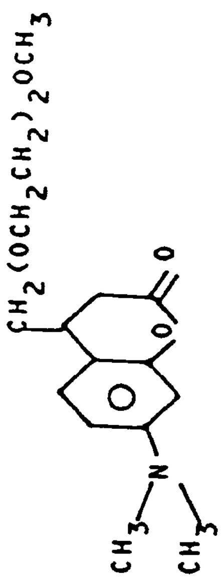

Composé n°4

7-diéthylamino-4-(2',5',8'-trioxanonyl)-coumarine

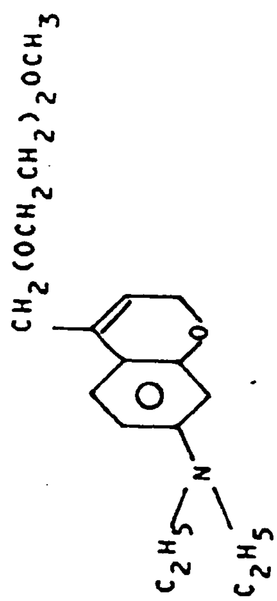

Composé n° 5

2,3,6,7-tétrahydroxy-9-(2',5',8'-trioxanonyl)-1H,5H,11H-(1)-benzopyrano (6,7,8-ij)-quinolizinone-11

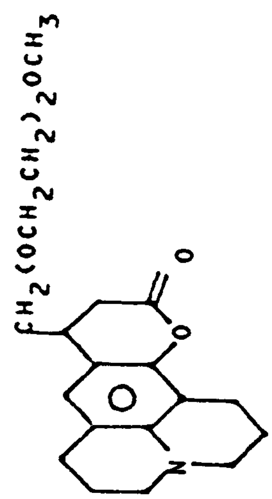

TABLEAU ( suite )

Composé n°6

2,3,6,7-tétrahydro-9-(9'-carboxyéthyl- 2',5',8'-trioxanonyl)-s
1H,5H, 11H-(-1)-benzopyrano-(6,7,8-ij) quinolizinone-11

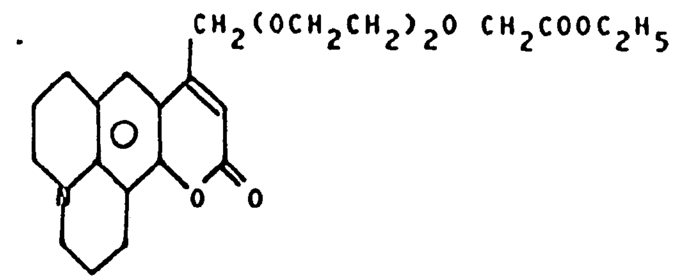

Composé n°7

2,3,6,7-tétrahydro-9-(9'-carboxy-2',5',8'-trioxanonyl)-1H, 5H, 11H-(1)-benzopyrano-(6,7,8-ij)quinolizinone-11

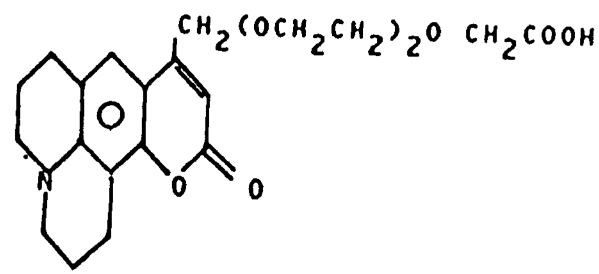

TABLEAU (suite)

| | | |
|---|---|---|
| Composé n°8 | 7-hydroxy-4-(2',5',8')-trioxanonyl)-coumarine | 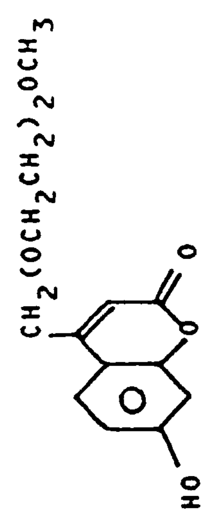 |
| Composé n°9 | 4-(2',5',8'-trioxanonyl)-esculétine. | 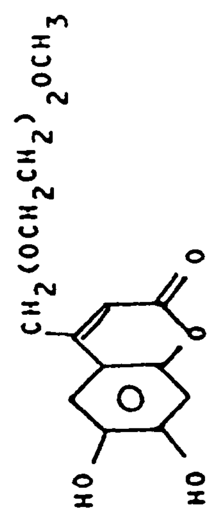 |

**Revendications**

1. Colorant laser comprenant un dérivé de coumarine de formule :

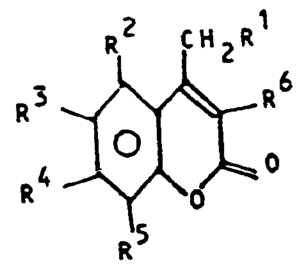

(I)

dans laquelle:

1) $R^1$ représente un radical répondant aux formules :

- $(OCH_2CH_2)_mOCH_2R^7$, ou
- $(OCH(CH_3)CH_2)_mOCH_2R^7$,

dans lesquelles m est un nombre entier de 1 à 30, et $R^7$ représente :

- un atome d'hydrogène,
- un atome d'halogène,
- OH,
- $OR^8$,
- SH,
- $SR^8$,
- COOH,
- $COOR^9$,
- $NH_2$,
- $NHR^8$,
- $NR^8R^{10}$,
- $SO_3H$,
- $SO_3R^9$, ou
- un radical alkyle, alcoxy ou aryle , non substitué ou substitué par au moins un substituant choisi parmi les atomes d'halogène, le radical phényle, $CF_3$, OH, $OR^8$, SH, $SR^8$, COOH, $COOR^9$, $NH_2$, $NHR^8$, $NR^8R^{10}$, $SO_3H$ et $SO_3R^9$,
  où $R^8$ est un radical alkyle ou aryle, $R^9$ est un radical alkyle ou aryle, $NH_4$ ou $M_{1/v}$ avec M étant un métal de valence v, et $R^{10}$ est un radical alkyle ou aryle, ou $R^8$ et $R^{10}$ peuvent former ensemble un cycle hydrocarboné, saturé ou insaturé comportant éventuellement un hétéroatome choisi parmi O, S et N,

2) $R^2$, $R^3$, $R^4$ et $R^5$ qui peuvent être identiques ou différents, représentent

- un atome d'hydrogène,
- un atome d'halogène,
- $NH_2$,
- $NHR^8$,
- $NR^8R^{10}$,
- SH
- $SR^8$
- OH
- $OR^8$

avec $R^8$ et $R^{10}$ ayant la signification donnée ci-dessus,

- un radical alkyle ou alcoxy, non substitué ou substitué par au moins un substituant choisi parmi les atomes d'halogène, OH, $OR^8$, SH, $SR^8$, COOH, $COOR^9$, $NH_2$, $NHR^8$, $NR^8R^{10}$, $SO_3H$, $SO_3R^9$ et $CF_3$, et avec $R^8$, $R^9$ et $R^{10}$ ayant la signification donnée ci-dessus, ou

3)$R^2$ et $R^3$, $R^3$ et $R^4$ ou $R^4$ et $R^5$ forment ensemble un noyau cyclique saturé ou insaturé de 5 à 8 atomes de carbone, ou un noyau hétérocyclique comportant au moins un hétéroatome choisi parmi N, O et S, ou

4) $R^3$, $R^4$ et $R^5$ forment avec le noyau phényle auquel ils sont liés un noyau polycyclique, à trois cycles condensés comportant éventuellement un ou plusieurs hétéroatomes choisis parmi N, O et S, ou

5) $R^2$, $R^3$ et $R^4$ forment avec le noyau phényle auquel ils sont liés un noyau polycyclique, à trois cycles condensés, comportant éventuellement un ou plusieurs hétéroatomes choisis parmi N, O et S, et

6) $R^6$ représente

- un atome d'hydrogène,

- un atome d'halogène,
- COOH,
- $COOR^9$ avec $R^9$ ayant la signification donnée ci-dessus, ou
- un radical alkyle non substitué ou substitué par au moins un substituant choisi parmi les atomes d'halogène, OH, SH, COOH, COOR9, $OR^8$, $SR^8$, $SO_3H$ et $SO_3R^9$ avec $R^8$ et $R^9$ ayant la signification donnée ci-dessus.

2. Colorant laser selon la revendication 1, caractérisé en ce qu'au moins l'un des $R^2$, $R^3$, $R^4$ et $R^5$ représente $NH_2$, $NHR^8$, $NR^8R^{10}$, OH, $OR^8$, SH, $SR^8$ ou un radical alkyle substitué ou non.

3. Colorant laser selon l'une quelconque des revendications 1 et 2, caractérisé en ce que $R^4$ représente $NH_2$, $N(CH_3)_2$, $N(C_2H_5)_2$ ou OH.

4. Colorant laser selon l'une quelconque des revendications 1 à 3, caractérisé en ce que $R^2$, $R^3$, $R^5$ et $R^6$ représentent un atome d'hydrogène.

5. Colorant laser selon l'une quelconque des revendications 1 et 2, caractérisé en ce que $R^3$ et $R^4$ représentent OH.

6. Colorant laser selon la revendication 5, caractérisé en ce que $R^2$, $R^5$ et $R^6$ représentent un atome d'hydrogène.

7. Colorant laser selon la revendication 1, caractérisé en ce que $R^3$, $R^4$ et $R^5$ forment avec le noyau phényle auquel ils sont liés le noyau polycyclique de formule:

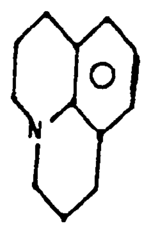

8. Colorant laser selon la revendication 7, caractérisé en ce que $R^2$ et $R^6$ représentent un atome d'hydrogène.

9. Colorant laser selon l'une quelconque des revendications 1 à 8, caractérisé en ce que $R^1$ représente
   - $(OCH_2CH_2)_2OCH_3$,
   - $(OCH_2CH_2)_2$-$OCH_2COOH$, ou
   - $(OCH_2CH_2)_2OCH_2COOC_2H_5$

10. Colorant laser selon la revendication 1, caractérisé en ce que le dérivé de coumarine répond à la formule:

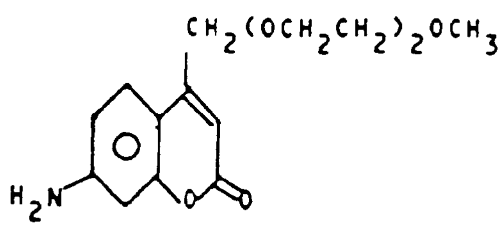

11. Colorant laser selon l'une quelconque des revendications 1 à 10 sous forme de solution, caractérisé en ce que le solvant de la solution de colorant est l'eau.

12. Colorant laser selon l'une quelconque des revendications 1 à 4 sous forme de solution, caractérisé en ce que le solvant de la solution de colorant est un mélange d'eau et d'un alcool.

13. Colorant laser selon l'une quelconque des revendications 1 à 12 sous forme de solution, caractérisé en

ce que la solution de colorant comprend de 0,5 à 3 g/l de dérivé de coumarine.

## Patentansprüche

1. Laserfarbstoff, umfassend ein Cumarinderivat der Formel:

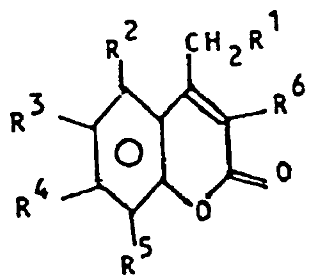

(I)

worin:

1) $R^1$ einen Rest darstellt, der den Formeln:

- $(OCH_2CH_2)_mOCH_2R^7$ oder
- $(OCH(CH_3)CH_2)_mOCH_2R^7$ entspricht,
  worin m eine ganze Zahl von 1 bis 30 ist und $R^7$
- ein Wasserstoffatom,
- ein Halogenatom,
- OH,
- $OR^8$,
- SH,
- $SR^8$,
- COOH,
- $COOR^9$,
- $NH_2$,
- $NHR^8$,
- $NR^8R^{10}$,
- $SO_3H$,
- $SO_3R^9$ oder
- einen Alkyl-, Alkoxy- oder Arylrest, der nicht substituiert oder mit wenigstens einem Substituenten substituiert ist, der aus Halogenatomen, Phenylrest, $CF_3$, OH, $OR^8$, SH, $SR^8$, COOH, $COOR^9$, $NH_2$, $NHR^8$, $NR^8R^{10}$, $SO_3H$ und $SO_3R^9$ ausgewählt ist,
  worin $R^8$ ein Alkyl- oder Arylrest ist, $R^9$ ein Alkyl- oder Arylrest, $NH_4$ oder $M_{1/v}$ ist, wobei M ein Metall mit der Wertigkeit v ist, und $R^{10}$ ein Alkyl- oder Arylrest ist, wobei $R^8$ und $R^{10}$ zusammen einen gesättigten oder ungesättigten Kohlenwasserstoffring bilden können, der gegebenenfalls ein aus O, S und N gewähltes Heteroatom trägt,
  darstellt,

2) $R^2$, $R^3$, $R^4$ und $R^5$, die gleich oder verschieden sein können,

- ein Wasserstoffatom,
- ein Halogenatom,
- $NH_2$,
- $NHR^8$,
- $NR^8R^{10}$,
- SH,
- $SR^8$,
- OH,
- $OR^8$, wobei $R^8$ und $R^{10}$ dasselbe wie oben bedeuten,
- einen Alkyl- oder Alkoxyrest, der nicht substituiert oder mit wenigstens einem Substituenten substituiert ist, der aus Halogenatomen, OH, $OR^8$, SH, $SR^8$, COOH, $COOR^9$, $NH_2$, $NHR^8$, $NR^8R^{10}$, $SO_3H$, $SO_3R^9$ und $CF_3$ ausgewählt ist, wobei $R^8$, $R^9$ und $R^{10}$ dasselbe wie oben bedeuten, darstellen oder

3) $R^2$ und $R^3$, $R^3$ und $R^4$ oder $R^4$ und $R^5$ zusammen einen gesättigten oder ungesättigten cyclischen

Kern mit 5 bis 8 Kohlenstoffatomen oder einen heterocyclischen Kern mit wenigstens einem aus N, O und S ausgewählten Heteroatom bilden oder
4) $R^3$, $R^4$ und $R^5$ mit dem Phenylkern, an den sie gebunden sind, einen polycyclischen Kern mit drei aneinanderkondensierten Ringen bilden, der gegebenenfalls ein oder mehrere aus N, O und S ausgewählte Heteroatome trägt, oder
5) $R^2$, $R^3$ und $R^4$ mit dem Phenylkern, an den sie gebunden sind, einen polycyclischen Kern mit drei aneinanderkondensierten Ringen bilden, der gegebenenfalls ein oder mehrere aus N, O und S ausgewählte Heteroatome trägt, und
6) $R^6$

- ein Wasserstoffatom,
- ein Halogenatom,
- COOH,
- $COOR^9$, wobei $R^9$ dasselbe wie oben bedeutet, oder
- einen Alkylrest, der nicht substituiert oder mit wenigstens einem Substituenten substituiert ist, der aus Halogenatomen, OH, SH, COOH, $COOR^9$, $OR^8$, $SR^8$, $SO_3H$ und $SO_3R^9$ ausgewählt ist, wobei $R^8$ und $R^9$ dasselbe wie oben bedeuten,

darstellt.

2. Laserfarbstoff gemäß Anspruch 1, dadurch gekennzeichnet, daß wenigstens eines von $R^2$, $R^3$, $R^4$ und $R^5$ $NH_2$, $NHR^8$, $NR^8R^{10}$, OH, $OR^8$, SH, $SR^8$ oder einen substituierten oder nicht substituierten Alkylrest darstellt.

3. Laserfarbstoff gemäß einem der Ansprüche 1 und 2, dadurch gekennzeichnet, daß $R^4$ $NH_2$, $N(CH_3)_2$, $N(C_2H_5)_2$ oder OH darstellt.

4. Laserfarbstoff gemäß einem der Ansprüche 1 bis 3, dadurch gekennzeichnet, daß $R^2$, $R^3$, $R^5$ und $R^6$ ein Wasserstoffatom darstellen.

5. Laserfarbstoff gemäß einem der Ansprüche 1 und 2, dadurch gekennzeichnet, daß $R^3$ und $R^4$ OH darstellen.

6. Laserfarbstoff gemäß Anspruch 5, dadurch gekennzeichnet, daß $R^2$, $R^5$ und $R^6$ ein Wasserstoffatom darstellen.

7. Laserfarbstoff gemäß Anspruch 1, dadurch gekennzeichnet, daß $R^3$, $R^4$ und $R^5$ mit dem Phenylkern, an den sie gebunden sind, den polycyclischen Kern der Formel:

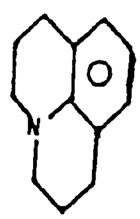

bilden.

8. Laserfarbstoff gemäß Anspruch 7, dadurch gekennzeichnet, daß $R^2$ und $R^6$ ein Wasserstoffatom darstellen.

9. Laserfarbstoff gemäß einem der Ansprüche 1 bis 8, dadurch gekennzeichnet, daß $R^1$
- $(OCH_2CH_2)_2OCH_3$,
- $(OCH_2CH_2)_2OCH_2COOH$ oder
- $(OCH_2CH_2)_2OCH_2COOC_2H_5$ darstellt.

10. Laserfarbstoff gemäß Anspruch 1, dadurch gekennzeichnet, daß das Cumarinderivat der Formel:

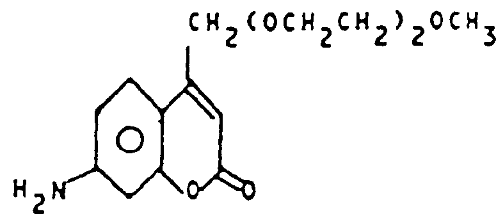

entspricht.

**11.** Laserfarbstoff gemäß einem der Ansprüche 1 bis 10 in Lösung, dadurch gekennzeichnet, daß das Lösungsmittel der Farbstofflösung Wasser ist.

**12.** Laserfarbstoff gemäß einem der Ansprüche 1 bis 4 in Lösung, dadurch gekennzeichnet, daß das Lösungsmittel der Farbstofflösung ein Gemisch aus Wasser und Alkohol ist.

**13.** Laserfarbstoff gemäß einem der Ansprüche 1 bis 12 in Lösung, dadurch gekennzeichnet, daß die Farbstofflösung 0,5 bis 3 g/l des Cumarinderivats umfaßt.

## Claims

**1.** Laser dye comprising a coumarin derivative of formula :

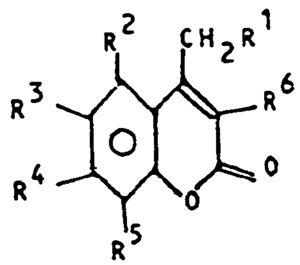

(I)

in which :

1) $R^1$ represents a radical with the formula :
- $(OCH_2CH_2)_mOCH_2R^7$ , or
- $(OCH(CH_3)CH_2)_mOCH_2R^7$ ,

in which m is a whole number between 1 and 30, and $R^7$ represents
- a hydrogen atom,
- a halogen atom,
- OH,
- $OR^8$,
- SH,
- $SR^8$,
- COOH,
- $COOR^9$,
- $NH_2$,
- $NHR^8$,
- $NR^8R^{10}$,
- $SO_3H$,
- $SO_3R^9$, or
- an alkyl, alkoxy or aryl radical, unsubstituted or substituted by at least one substituent chosen from amongst the halogen atoms, the phenyl radical, $CF_3$, OH, $OR^8$, SH, $SR^8$, COOH, $COOR^9$, $NH_2$, $NHR^8$, $NR^8R^{10}$, $SO_3H$, and $SO_3R^9$, where $R^8$ is an alkyl or aryl radical, $R^9$ is an alkyl or aryl radical, $NH_4$ or $M_{1/v}$ where M is a metal of valence v, and $R^{10}$ is an alkyl or aryl radical, or $R^8$ and $R^{10}$ can together form a saturated or unsaturated cyclic hydrocarbon, optionally including a heteroatom chosen from O, S and N,

2) $R^2$, $R^3$, $R^4$ and $R^5$ which can be the same or different represent

- a hydrogen atom,
- a halogen atom,
- $NH_2$,
- $NHR^8$,
- $NR^8R^{10}$,
- SH,
- $SR^8$,
- OH,
- $OR^8$,

where $R^8$ and $R^{10}$ are as already defined above,

- an alkyl or alkoxy radical, unsubstituted or substituted by at least one substituent chosen from amongst the halogen atoms, OH, $OR^8$, SH, $SR^8$, COOH, $COOR^9$, $NH_2$, $NHR^8$, $NR^8R^{10}$, $SO_3H$, $SO_3R^9$, and $CF_3$, and where $R^8$, $R^9$ and $R^{10}$ are as already defined above, or

3) $R^2$ and $R^3$, $R^3$ and $R^4$, or $R^4$ and $R^5$ together form a saturated or unsaturated ring of 5 to 8 carbon atoms, or a heterocyclic ring containing at least one heteroatom chosen from amongst N, O and S, or

4) $R^3$, $R^4$ and $R^5$, together with the phenyl ring to which they are attached, form a polycyclic ring system of three condensed rings optionally containing one or more heteroatoms chosen from amongst N, O and S, or

5) $R^2$, $R^3$ and $R^4$, together with the phenyl ring to which they are attached, form a polycyclic ring system of three condensed rings, optionally containing one or more heteroatoms chosen from amongst N, O and S, and

6) $R^6$ represents

- a hydrogen atom,
- a halogen atom,
- COOH,
- $COOR^9$ where $R^9$ is defined as above, or
- an alkyl radical, unsubstituted or substituted by at least one substituent taken from amongst the halogen atoms, OH, SH, COOH, $COOR^9$, $OR^8$, $SR^8$, $SO_3H$, and $SO_3R^9$ where $R^8$ and $R^9$ are as already defined above.

**2.** Laser dye according to claim 1, characterized in that at least one of $R^2$, $R^3$, $R^4$ and $R^5$ represents $NH_2$, $NHR^8$, $NR^8R^{10}$, OH, $OR^8$, SH, $SR^8$ or a substituted or unsubstituted alkyl radical.

**3.** Laser dye according to any one of claims 1 and 2, characterized in that $R^4$ represents $NH_2$, $N(CH_3)_2$, $N(C_2H_5)_2$ or OH.

**4.** Laser dye according any one of claims 1 to 3, characterized in that $R^2$, $R^3$, $R^5$ and $R^6$ represent hydrogen atoms.

**5.** Laser dye according to any one of claims 1 and 2, characterized in that $R^3$ and $R^4$ represent OH.

**6.** Laser dye according to claim 5, characterized in that $R^2$, $R^5$ and $R^6$ represent hydrogen atoms.

**7.** Laser dye according to claim 1, characterized in that $R^3$, $R^4$ and $R^5$, together with the phenyl ring to which they are attached, form a polycyclic ring system of formula :

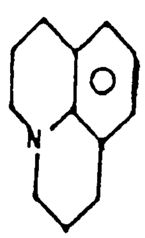

**8.** Laser dye according to claim 7, characterized in that $R^2$ and $R^6$ represent hydrogen atoms.

**9.** Laser dye according to any one of claims 1 to 8, characterized in that $R^1$ represents
- $(OCH_2CH_2)_2OCH_3$
- $(OCH_2CH_2)_2$-$OCH_2COOH$, or
- $(OCH_2CH_2)_2$-$OCH_2COOC_2H_5$

**10.** Laser dye according to claim 1, characterized in that the coumarin derivative has the formula:

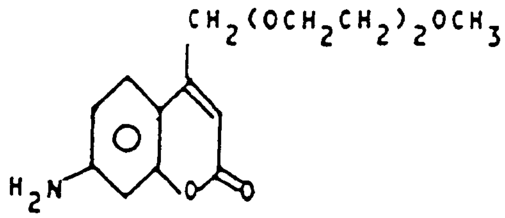

**11.** Laser dye according to any one of claims 1 to 10, in solution form, characterized in that the solvent of the dye solution is water.

**12.** Laser dye according to any one of claims 1 to 4, in solution form, characterized in that the solvent of the dye is a mixture of water and an alcohol.

**13.** Laser dye according to any one of claims 1 to 12, in solution form, characterized in that the dye solution contains from 0.5 to 3 g/l of the coumarin derivative.

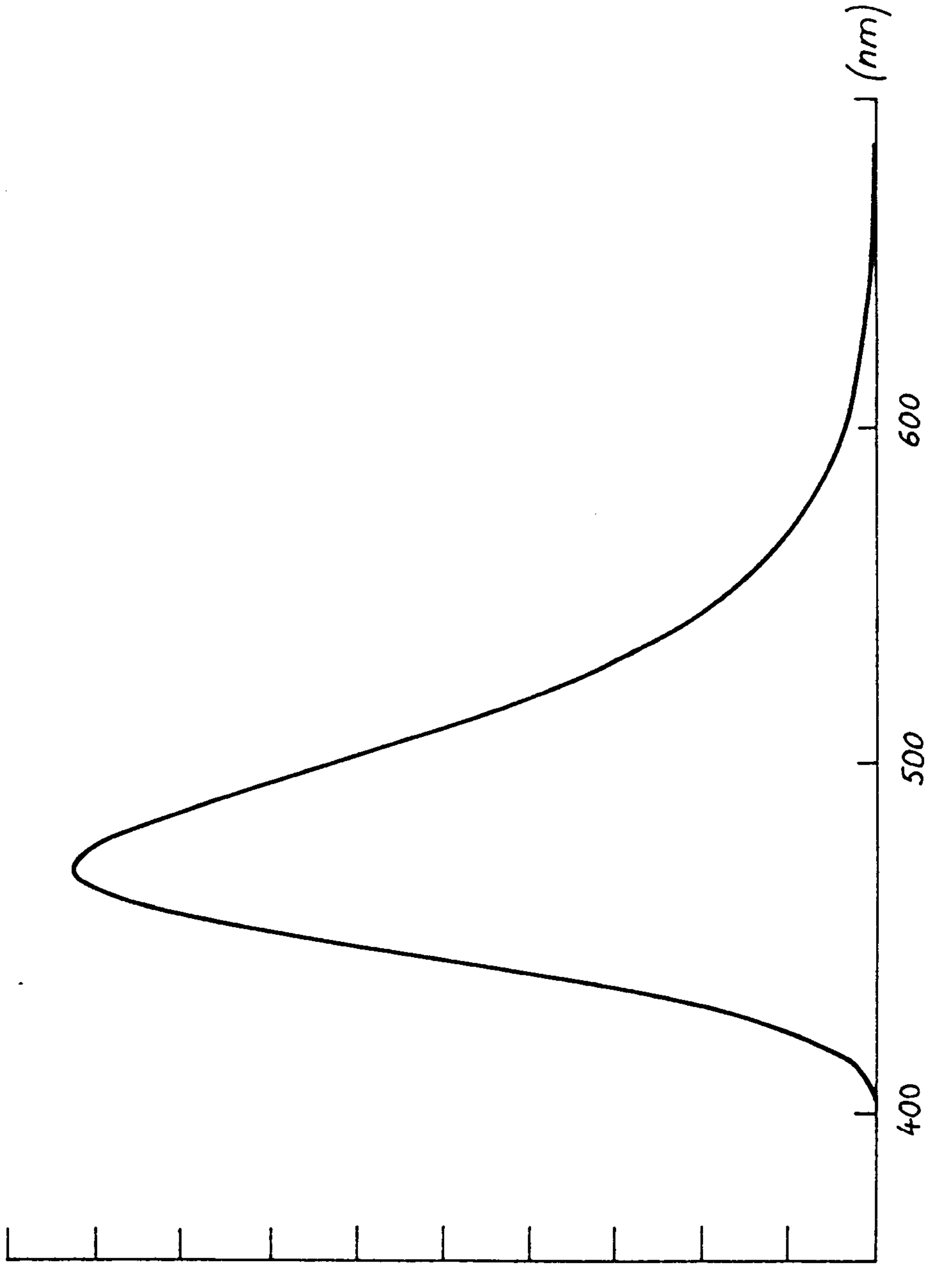


FIG. 1